# EUROPÄISCHE PATENTANMELDUNG

(11) **EP 1 205 746 A1**
(43) Veröffentlichungstag der Anmeldung: **15.05.2002**
(21) Anmeldenummer: 00811057.9
(22) Anmeldetag: 10.11.2000
(51) Int. Cl.: G01N 25/18

(54) **Verfahren zum Prüfen der Qualität einer Lotschicht eines Hochleistungshalbleitermoduls**

(71) Anmelder: ABB RESEARCH LTD., 8050 Zürich (CH)
(72) Erfinder: Zehringer, Raymond, 4132 Muttenz (CH); Stuck, Alexander, 5430 Wettingen (CH)
(74) Vertreter: ABB Patent Attorneys

(57) **Zusammenfassung**

Bei einem Verfahren zum Prüfen der Qualität von Lotschichten (12, 13; 16a-d), mittels derer ein Halbleiterchip (17a,..,d) eines Hochleistungshalbleitermoduls (10) zur Abfuhr der Verlustwärme auf einer zugehörigen Kühlplatte (11) befestigt ist, wird eine schnelle und für die Serienproduktion geeignete Durchführung dadurch erreicht, dass der Halbleiterchip (17a,..,d) durch eine Zufuhr von Wärme auf eine höhere Temperatur aufgewärmt und der Abfluss der Wärme über die Lotschichten (12, 13; 16a-d) zur Kühlplatte (11) gemessen und ausgewertet wird.

## Beschreibung

### TECHNISCHES GEBIET

Die vorliegende Erfindung bezieht sich auf das Gebiet der Leistungselektronik. Sie betrifft ein Verfahren zum Prüfen der Qualität einer Lotschicht eines Hochleistungshalbleitermoduls gemäss dem Oberbegriff des Anspruchs 1.

### STAND DER TECHNIK

Hochleistungshalbleitermodule sind Komponenten für die Leistungselektronik. Ein Modul beinhaltet in der Regel mehrere Halbleiterbauelemente in Form von Halbleiterchips, die innerhalb eines gemeinsamen Gehäuses zu einer logischen Funktionseinheit zusammengefasst werden können. Solche Module (Thyristor-, IGBT- und Dioden-Module), wie sie z.B. aus der US-A-6,087,682 sind, sind heute im Leistungsbereich bis zu 2500V und bis zu 1000 A weit verbreitet und werden vor allem in Industrie- und Traktionsantrieben eingesetzt. Diese Anwendungen setzen höchste Ansprüche an die Zuverlässigkeit und die Lebensdauer der einzelnen Module. Ein wichtiger Ausfallmechanismus ist die Ermüdung der Lotschichten zwischen Si-Chip, Isolationskeramik und Kühlplatte. Dies führt schliesslich zu einer Überhitzung der Chips und zum Ablösen der elektrischen Kontakte. Häufig setzt die Ablösung der Lotschichten an kleinen Fehlstellen in der Lotschicht an. Diese Fehlstellen sind oft produktionsbedingt. Es ist bekannt, sie mittels Ultraschallmikroskopie nachzuweisen, was jedoch zeitraubend ist und oft die untersuchten Proben verunreinigt oder gar zerstört, da sie in Flüssigkeit getaucht werden müssen.

Aus Helmuth Lemme, Infrarotlicht spürt Materialrisse auf, Elektronik, 20, 2000, 4. Oktober 2000, ist ferner eine zeitlich und örtlich hochaufgelöste Infrarotkamera bekannt, mittels welcher sich Mikrorisse in Solarzellen-Wafern aufspüren lassen.

### DARSTELLUNG DER ERFINDUNG

Es ist daher Aufgabe der Erfindung, ein schnelles, zerstörungsfreies Prüfverfahren zum Nachweis kleiner Fehlstellen in Lotverbindungen von Halbleitermodulen zu schaffen, welches in einer serienmässigen Produktion einsetzbar ist.

Die Aufgabe wird durch die Gesamtheit der Merkmale des Anspruchs 1 gelöst. Die Erfindung geht davon aus, dass die Qualität der zwischen den Halbleiterchips und der Kühlplatte befindlichen Lotschichten einen erheblichen Einfluss auf den Wärmefluss von den Halbleiterchips zu der Kühlplatte, d.h., die Kühlung des Chips, hat. Der Kern der Erfindung besteht deshalb darin, den Wärmeabfluss aus dem jeweiligen Halbleiterchip hin zur Kühlplatte zu bestimmen, und aus der Art bzw. Höhe des Wärmeabflusses Rückschlüsse auf die Qualität der Lotschichten zu ziehen. Die Bestimmung des Wärmeabflusses erfolgt vorzugsweise auf indirekte Weise.

Gemäss einer ersten bevorzugten Ausgestaltung der Erfindung erfolgt die Messung des Wärmeabflusses stationär, indem die Zufuhr von Wärme zeitlich konstant erfolgt und die Temperatur des Halbleiterchips gemessen wird. Je höher bei konstanter Wärmezufuhr die Temperatur des Halbleiterchips ist, um so schlechter ist die Qualität der zugehörigen Lotschichten.

Eine zweite bevorzugte Ausgestaltung des erfindungsgemässen Verfahrens ist dadurch gekennzeichnet, dass die Zufuhr von Wärme kurzzeitig, insbesondere impulsartig, erfolgt und das zeitliche Abklingen der Temperaturerhöhung des Halbleiterchips gemessen wird. Weil hier ein stationärer Zustand nicht abgewartet werden muss, ist diese Ausgestaltung des Prüfverfahrens besonders schnell und führt innerhalb weniger Sekunden zu einem verlässlichen Prüfergebnis.

Die für das Prüfverfahren benötigte Zufuhr von Wärme kann einerseits durch elektrische Heizung in dem Halbleiterchip selbst bewirkt werden. Dies hat den Vorteil, dass keine externen Heizvorrichtungen benötigt werden, und dass Wärmeerzeugung und Wärmefluss weitgehend den im Betrieb herrschenden Bedingungen gleichen.

Es ist aber ebenso denkbar und mit Vorteilen verbunden, wenn die Zufuhr von Wärme durch eine ausserhalb des Halbleiterchips angeordnete Heizquelle bewirkt wird, wobei als Heizquelle insbesondere eine Laserlichtquelle oder eine Blitzlichtlampe verwendet wird.

Wenn zur Bestimmung des Wärmeabflusses über die Lotschichten die Temperatur des zugehörigen Halbleiterchips gemessen wird, ist es besonders vorteilhaft, dass zur Messung der Chiptemperatur eine temperaturabhängige elektrische Kenngrösse des Halbleiterchips gemessen wird. Hierdurch kann auf einen eigenständigen Temperaturaufnehmer verzichtet werden.

Wenn der zu messende Halbleiterchip eine Kollektor-Emitter-Strecke umfasst, kann als temperaturabhängige elektrische Kenngrösse die Kollektor-Emitter-Spannung V_{CE} gemessen werden.

Wenn der zu messende Halbleiterchip eine Gate-Emitter-Strecke umfasst, kann als temperaturabhängige elektrische Kenngrösse die Gate-Emitter-Schwellspannung V_{gEth} gemessen werden.

Die Prüfung ist dabei besonders schnell und einfach durchzuführen, wenn zur Messung der elektrischen Kenngrösse der Halbleiterchip mittels aufgesetzter Kontaktpins kontaktiert wird.

Die Messung kann auch mittels einer zeitlich und örtlich hochaufgelösten Infrarotkamera erfolgen, welche eine Abkühlcharakteristik aufzunehmen und mittels einer Bilddatenverarbeitungssoftware zu analysieren vermag. Als Kamera eignet sich die im eingangs erwähnten Artikel von Helmuth Lemme.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer Seitenansicht den beispielhaften Aufbau eines Hochleistungshalbleitermoduls (ohne Gehäuse), welches mit dem Prüfverfahren nach der Erfindung geprüft werden kann;
- Fig. 2: ein erstes bevorzugtes Ausführungsbeispiel des Prüfungsverfahrens nach der Erfindung, bei welchem das Modul aus Fig. 1 elektrisch kontaktiert und die Wärmeerhöhung und Temperaturmessung im Halbleiterchip selbst erfolgt;
- Fig. 3: ein zweites bevorzugtes Ausführungsbeispiel des Prüfungsverfahrens nach der Erfindung, bei welchem das Modul aus Fig. 1 elektrisch kontaktiert wird, und die durch eine externe Heizquelle hervorgerufene Temperaturerhöhung über eine temperaturabhängige elektrische Kenngrösse des Halbleiterchips verfolgt wird; und
- Fig. 4: ein charakteristisches Diagramm der Chiptemperatur T über der Zeit t bei der impulsartigen Aufheizung des Chip für unterschiedliche Qualitäten der Lotschichten.

### WEGE ZUR AUSFÜHRUNG DER ERFINDUNG

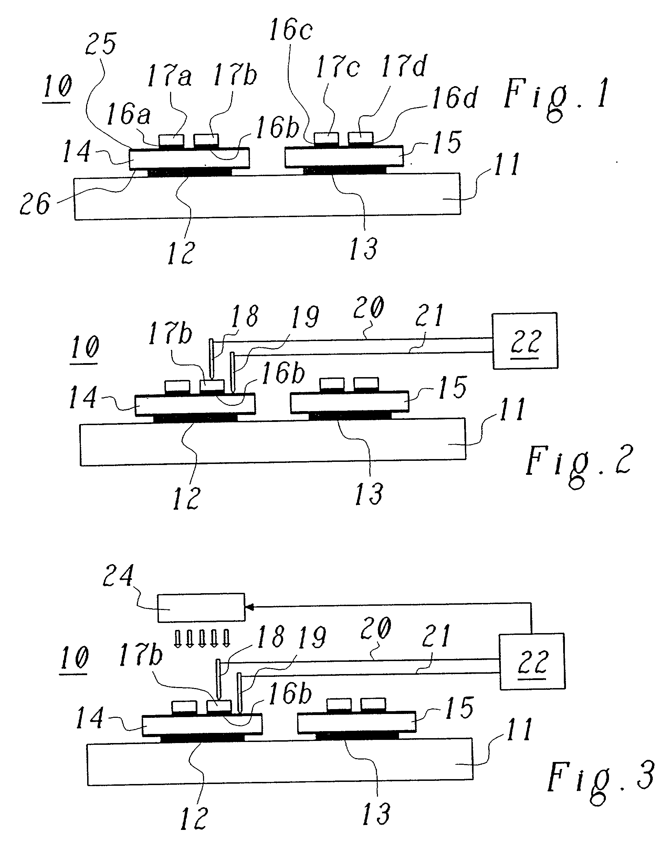

In Fig. 1 ist in einer Seitenansicht der beispielhafte Aufbau eines Hochleistungshalbleitermoduls (ohne Gehäuse) dargestellt, welches mit dem Prüfverfahren nach der Erfindung geprüft werden kann. Das Hochleistungshalbleitermodul 10 ist auf einer massiven (metallischen) Kühlplatte 11 aufgebaut und umfasst eine Mehrzahl von Halbleiterchips (Thyristoren, IGBTs, Dioden, o.ä.) 17a,..,17d, die elektrisch untereinander verschaltet und von aussen anschliessbar sind. Im dargestellten Beispiel sind je zwei Halbleiterchips 17a,b und 17c,d mittels zugehöriger erster Lotschichten 16a,b bzw. 16c,d auf eine gemeinsame Isolationsplatte 14 bzw. 15 aufgelötet. Die Isolationsplatten 14, 15 bestehen aus einer Keramikplatte (z.B. aus AIN oder Al₂O₃), die beidseitig mit einer Metallschicht 25, 26 (z.B. einer Cu-Folie) versehen ist. Die Isolationsplatten 14, 15 sind ihrerseits mittels zweiter Lotschichten 12, 13 auf die Kühlplatte 11 aufgelötet.

Das erfindungsgemäss Prüfverfahren für die Qualität der ersten und zweiten Lotschichten 16a-d bzw. 12, 13 basiert auf der Tatsache, dass die Kühlung der Halbleiterchips 17a-d entscheidend von der Qualität der Lotschichten 12, 13 und 16a-d abhängt und relativ einfach über elektrische Parameter der Halbleiterchips 17a-d gemessen werden kann. Die Temperatur der in den Halbleiterchips 17a-d verwirklichten Silizium-Bauelemente kann durch verschiedene elektrische Kenngrössen, welche einen Temperaturgang aufweisen, gemessen werden. Beispiele dazu sind die die Kollektor-Emitter-Spannung V_{CE} oder die Gate-Emitter-Schwellspannung V_{gEth}. Die zeitaufgelöste Messung einer solchen temperatursensitiven Grösse erlaubt es, Messungen der Chiptemperatur im (sub-) Milisekundenbereich durchzuführen. Durch Messen eines dieser oder beider Parameter für jeden Halbleiterchip 17a-d in einem Modul 10 kann innerhalb weniger Sekunden entschieden werden, ob die Lotschichtqualität gut oder schlecht ist. Eine solche Methode ist deshalb sehr gut zur Qualitätssicherung in einer Produktion geeignet.

Die Wärme kann auf verschiedene Art in die zu messenden Halbleiterchips 17a-d eingebracht werden. Denkbar ist eine elektrische Heizung der Chips, d.h. man schaltet jeden Chip einzeln (z.B. über eine separate Gateansteuerung) kurzzeitig ein und beheizt ihn mit viel Strom (typ. mehrere 100 A). Die Messung der elektrischen Chipparameter und die Gateansteuerung erfolgt gemäss Fig. 2 durch Kontaktpins 18, 19, die über Messleitungen 20, 21 mit einer Messvorrichtung 22 in Verbindung stehen, und über die jeder der Halbleiterchips 17a-d einzeln ausgewählt und angesteuert werden kann.

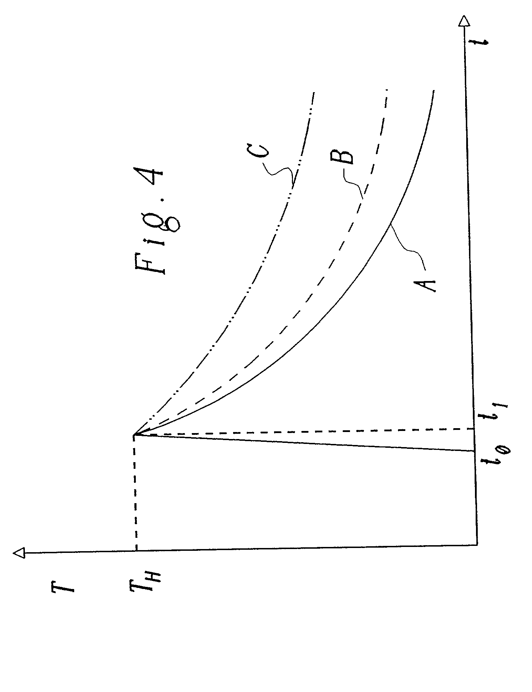

Technisch einfacher ist die Heizung mit einer externen Heizquelle 24 gemäss Fig. 3, insbesondere in Form einer Blitzlichtlampe oder einer Laserlichtquelle. Die Heizquelle 24 wird von der Messvorrichtung 22 über eine Steuerleitung 23 angesteuert und gibt einen entsprechenden Heizimpuls auf die Oberfläche des ausgewählten Halbleiterchips (17b in Fig. 3), die sich innerhalb von Millisekunden aufheizt. Die darauffolgende thermische Diffusion über die Lotschichten 16b und 12 in die Kühlplatte 11 wird über die elektrischen Chipparameter gemessen. Sie hängt entscheidend von der Qualität der Lotschichten 16b und 12 ab. Die gemessene Temperatur T über der Zeit t hat für die Impulsmessung (mit Blitzlicht- oder Laserlichtimpulsen) den in Fig. 4 gezeigten charakteristischen Verlauf. In einer kurzen Zeitspanne zwischen t₀ und t₁ erfolgt die Aufheizung des Chip auf eine erhöhte Temperatur T_{H}, von der aus dann ein mehr oder weniger steiler Abfall aufgrund der thermischen Diffusion stattfindet. Sind die Lotschichten einwandfrei, ergibt sich ein steiler Abfall gemäss Kurve A. Sind die Lotschichten dagegen gestört oder sonstwie minderwertig, verflacht der Abfall zunehmend (Kurven B oder C). Es kann daher aus der Art des Abklingens der Temperaturerhöhung direkt auf die Qualität der Lotschichten geschlossen werden.

Auch eine stationäre Messung der temperatursensitiven Chipparameter ist möglich und gibt im wesentlichen die gleiche Information. In diesem Fall erfolgt die Zufuhr von Wärme zeitlich konstant (mit konstanter Leistung). Je besser die Qualität der Lotschichten ist, um so besser ist die Kühlung des mit Wärme beaufschlagten Chips und um so niedriger ist die sich stationär einstellende . Chiptemperatur. Wenn dann die Temperatur des Halbleiterchips gemessen wird, können daraus ebenfalls Rückschlüsse auf die Qualität der Lotschichten gezogen werden.

### BEZUGSZEICHENLISTE

- 10: Hochleistungshalbleitermodul
- 11: Kühlplatte
- 12,13: Lotschicht
- 14,15: Isolationsplatte
- 16a-d: Lotschicht
- 17a-d: Halbleiterchip
- 18,19: Kontaktpin
- 20,21: Messleitung
- 22: Messvorrichtung
- 23: Steuerleitung
- 24: Heizquelle (Laser, Blitzlichtlampe, etc.)
- 25, 26: Metallschicht
- T: Temperatur
- T_{H}: erhöhte Temperatur des Halbleiterchips
- A-C: Kurve (Chiptemperatur)

## Patentansprüche

1. Verfahren zum Prüfen der Qualität von Lotschichten (12, 13; 16a-d) mittels derer ein Halbleiterchip (17a,..,d) eines Hochleistungshalbleitermoduls (10) zur Abfuhr der Verlustwärme auf einer zugehörigen Kühlplatte (11) befestigt ist, **dadurch gekennzeichnet, dass** der Halbleiterchip (17a,..,d) durch eine Zufuhr von Wärme auf eine höhere Temperatur aufgewärmt und der Abfluss der Wärme über die Lotschichten (12, 13; 16a-d) zur Kühlplatte (11) gemessen und ausgewertet wird.

2. Verfahren nach Anspruch 1, **dadurch gekennzeichnet, dass** die Zufuhr von Wärme zeitlich konstant erfolgt und die Temperatur des Halbleiterchips (17a,..,d) gemessen wird.

3. Verfahren nach Anspruch 1, **dadurch gekennzeichnet, dass** die Zufuhr von Wärme kurzzeitig, insbesondere impulsartig, erfolgt und das zeitliche Abklingen der Temperaturerhöhung des Halbleiterchips (17a,..,d) gemessen wird.

4. Verfahren nach einem der Ansprüche 1 bis 3, **dadurch gekennzeichnet, dass** die Zufuhr von Wärme durch elektrische Heizung in dem Halbleiterchip (17a,..,d) selbst bewirkt wird.

5. Verfahren nach einem der Ansprüche 1 bis 3, **dadurch gekennzeichnet, dass** die Zufuhr von Wärme durch eine ausserhalb des Halbleiterchips (17a,..,d) angeordnete Heizquelle (24) bewirkt wird.

6. Verfahren nach Anspruch 5, **dadurch gekennzeichnet, dass** als Heizquelle (24) eine Laserlichtquelle verwendet wird.

7. Verfahren nach Anspruch 5, **dadurch gekennzeichnet, dass** als Heizquelle (24) eine Blitzlichtlampe verwendet wird.

8. Verfahren nach einem der Ansprüche 1 bis 7, bei welchem zur Bestimmung des Wärmeabflusses über die Lotschichten (12, 13; 16a-d) die Temperatur des zugehörigen Halbleiterchips (17a,..,d) gemessen wird, **dadurch gekennzeichnet, dass** zur Messung der Chiptemperatur eine temperaturabhängige elektrische Kenngrösse des Halbleiterchips (17a,..,d) gemessen wird.

9. Verfahren nach Anspruch 8, **dadurch gekennzeichnet, dass** der Halbleiterchip (17a,,.,d) eine Kollektor-Emitter-Strecke umfasst und als temperaturabhängige elektrische Kenngrösse die Kollektor-Emitter-Spannung V_{CE} gemessen wird.

10. Verfahren nach Anspruch 8, **dadurch gekennzeichnet, dass** der Halbleiterchip (17a,,.,d) eine Gate-Emitter-Strecke umfasst und als temperaturabhängige elektrische Kenngrösse die Gate-Emitter-Schwellspannung V_{gEth} gemessen wird.

11. Verfahren nach einem der Ansprüche 8 bis 10, **dadurch gekennzeichnet, dass** zur Messung der elektrischen Kenngrösse der Halbleiterchip (17a,..,d) mittels aufgesetzter Kontaktpins (18,19) kontaktiert wird.
